# DEMANDE DE BREVET EUROPEEN

(11) **EP 1 020 411 A1**
(43) Date de publication de la demande: **19.07.2000**
(21) Numéro de dépôt: 00400116.0
(22) Date de dépôt: 18.01.2000
(51) Int. Cl.: C03B 9/48, C03B 40/00

(54) **Procédé de fabrication d'un moule, moule obtenu et procédé de fabrication de produits verriers au moyen de ce moule**

(30) Priorité: 18.01.1999 FR 9900461
(71) Demandeur: SAINT-GOBAIN EMBALLAGE, 92400 Courbevoie (FR)
(72) Inventeur: Merour, Philippe, 71640 Dracy le Fort (FR)
(74) Mandataire: Muller, René

(57) **Abrégé**

Le procédé de fabrication d'un moule pour produits verriers de l'invention comprend les étapes suivantes :
· disposer sur une partie ou la totalité de la surface de l'empreinte du moule, constituée d'un premier alliage métallique, une quantité désirée d'un second alliage métallique, puis à
· effectuer, sous l'action conjuguée de la pression et de la température, un soudage-diffusion dudit premier et dudit second alliages métalliques par compression isostatique à chaud.

Le moule ainsi obtenu est particulièrement approprié pour la fabrication de produits verriers tels que des bouteilles, et consiste notamment en un moule ébaucheur ou un moule finisseur, un moule de bague, un moule de fond ou un poinçon.

Un procédé de fabrication de produits verriers employant ce moule se caractérise par une qualité des produits et un rendement accrus.

## Description

La présente invention est relative, en particulier, à la fabrication d'articles en verre tels que bouteilles, flacons, pots... et, plus précisément, aux moules utilisés à cette fin.

Les procédés classiques et largement employés à l'heure actuelle pour fabriquer les bouteilles mettent en oeuvre des machines dites IS et sont connus sous les désignations de procédés 〈〈 soufflé-soufflé 〉〉 et 〈〈 pressé-soufflé 〉〉.

Ces procédés peuvent être décomposés en plusieurs étapes. On décrit, ci-après, le procédé 〈〈 soufflé-soufflé 〉〉 qui est le plus répandu :
· *le chargement*: une goutte de verre ou paraison entre sous l'effet de son propre poids dans un premier moule (ébaucheur), par l'extrémité supérieure de celui-ci, correspondant au fond de la bouteille ;
· *la compression*: après le chargement, un fond ébaucheur vient former le moule ébaucheur; puis on effectue un soufflage d'air comprimé dans le moule ébaucheur par l'intermédiaire du fond ébaucheur pour forcer le verre à bien pénétrer dans la partie inférieure du moule, qui correspond à la bague du futur article ; de plus cette compression assure un bon contact thermique entre le verre et le moule ;
· *le perçage*: un poinçon, de dimensions réduites, occupant approximativement la hauteur de la bague et fermant le bas du moule ébaucheur, se retire vers le bas, laissant place à une alimentation en air comprimé qui chasse devant lui le verre chaud moins visqueux situé au voisinage de l'axe du moule ébaucheur, le verre froid plus visqueux qui a été refroidi au contact du moule restant, quant à lui, en place ; une ébauche du futur article est ainsi obtenue ;
· *le transfert ;* lorsque l'ébauche s'est suffisamment refroidie dans le moule ébaucheur pour pouvoir être manipulée, elle est transférée dans un second moule (finisseur) qui a la forme de l'article final ;
· *l'allongement et le soufflage :* une fois placée dans le moule finisseur, on laisse l'ébauche s'allonger un certain temps avant de la souffler pour lui donner la forme de l'article ; cette étape d'allongement permet de bien répartir le verre dans tout l'article ;
· *l'extraction :* au contact du moule finisseur, le verre se refroidit rapidement, et quand sa viscosité est suffisamment basse, l'article est extrait du moule finisseur.

Le procédé 〈〈 pressé-soufflé 〉〉 ne diffère quant à lui du procédé 〈〈 soufflé-soufflé 〉〉 que dans la phase de formage de l'ébauche, qui est obtenue par le pressage du verre dans le moule ébaucheur fermé, au moyen d'un poinçon plus ou moins long qui pénètre dans le moule par le bas de celui-ci à travers le moule de bague. Il n'y a donc pas d'étapes de compression ni de perçage, l'ébauche de l'article étant formée en une seule fois par ce pressage.

Ces procédés permettent de fabriquer toutes les formes d'articles qu'elles soient axisymétriques ou non. Le dispositif mis en oeuvre comme indiqué ci-dessus ne constitue qu'une section d'une machine IS qui en comporte plusieurs.

La fonte et le bronze sont fréquemment utilisés pour constituer les moules décrits précédemment : leurs conductibilités thermiques sont en effet parfaitement adaptées aux transferts de chaleur recherchés vis-à-vis du verre dans les conditions de fabrication d'articles creux, et autorisent plus précisément des cadences de production élevées.

Ces matériaux sont cependant imparfaits à bien des égards.

La fonte présente notamment des irrégularités de surface en forme de grains; pouvant nuire à l'aspect du produit moulé.

D'autre part, la surface des moules constitués de ces matériaux est, du fait de leur relative fragilité notamment à chaud, susceptible d'être affectée plus ou moins gravement dans diverses circonstances provoquant là encore inévitablement des défauts de surface de l'article verrier. Ainsi, divers incidents de production sont à l'origine de blessures sur les moules. nécessitant de déposer les moules abîmés pour éventuellement les réparer. Les manipulations qui en découlent sont à nouveau sources de chocs, d'autant plus que les moules sont chauds.

Par ailleurs, les matériaux susmentionnés nécessitent de graisser régulièrement les moules ébaucheurs et finisseurs pour assurer un bon démoulage du verre sans génération de défaut sur les articles produits, mais aussi pour permettre une bonne entrée des paraisons dans les moules ébaucheurs, sans laquelle les machines de formage ne pourraient pas fonctionner de façon continue.

Ce graissage nécessaire actuellement est la cause de perte de rendement de fabrication de l'ordre de quelques pourcents, puisque les premières bouteilles produites après graissage sont mises au rebut car polluées par des résidus de graisse. A la longue, les résidus de graisse présents sur les moules deviennent gênants pour la fabrication (mauvaise qualité d'aspect des articles, problèmes de formage à cause d'évents d'échappements bouchés) et les moules doivent être déposés pour être nettoyés. Ce nettoyage est relativement agressif et est une des principales causes d'usure des moules et donc de leur mise au rebut.

Par ailleurs, aucun matériau ne présente le compromis requis de propriétés sur les plans de la conductibilité thermique, de la résistance aux températures élevées, de la résistance mécanique et la dureté à chaud, de la faculté de mise en oeuvre (usinabilité, possibilité de percer), de l'aspect de surface, dans des conditions d'utilisation industrielle et économique acceptables.

Pour remédier au problème exposé ci-dessus, une approche a consisté à revêtir une partie ou la totalité de l'empreinte des moules de verrerie par des alliages à base de nickel, beaucoup plus durs à chaud que les fontes ou les bronzes, beaucoup plus résistants à la corrosion à chaud, mais aussi d'aspects de surface beaucoup plus réguliers et mieux adaptés à l'application envisagée ; ces alliages permettent de plus de limiter très significativement le graissage des moules. Ces alliages ont tout d'abord été déposés au niveau des arêtes, où les moules se détériorent le plus souvent, puis sur la totalité des empreintes. Il est à signaler que la réalisation d'un moule entier en alliage à base de nickel n'est pas réaliste en raison des difficultés que présente l'usinage de ce matériau, de la très grande difficulté à le percer et de son coût élevé.

Pour déposer le revêtement d'alliage, deux techniques sont connues.

La première technique est une coulée directe de l'alliage à base de nickel dans une forme en bronze ou en fonte. Cette technique ne permet pas de maîtriser la microstructure de l'alliage ni la qualité de la liaison entre les deux matériaux (durabilité).

Ces difficultés ont orienté les spécialistes vers une seconde technique : la projection de poudres. Celle-ci ne donne pas non plus entière satisfaction. La liaison entre l'alliage à base de nickel et le métal support est essentiellement mécanique ; l'alliage s'incruste dans les rugosités du support, voire diffuse légèrement quand on réchauffe le revêtement après dépôt, mais alors le métal support est dégradé sous l'alliage à cause de ce réchauffage, d'où il peut résulter finalement un mauvais accrochage ou une mauvaise durabilité de la liaison entre les deux matériaux. On observe qu'en effet le revêtement se décroche du moule le rendant inutilisable, ou bien la liaison entre les deux matériaux se dégrade petit à petit avec création d'une barrière thermique rendant impossible le refroidissement des moules et donc la production d'articles. La poudre réchauffe le support dès qu'elle entre en contact avec lui; la structure du support est alors susceptible d'évoluer de manière néfaste dans certains cas.

De plus, les opérations de dépôt sont souvent manuelles, de sorte que la qualité des revêtements est difficilement reproductible.

En conséquence, l'invention a pour objet un procédé de fabrication d'un moule pour produits verriers qui remédie à ces inconvénients par le fait qu'il comprend les étapes consistant à :
· disposer sur une partie ou la totalité de la surface de l'empreinte du moule, constituée d'un premier alliage métallique, une quantité désirée d'un second alliage métallique, puis à
· effectuer, sous l'action conjuguée de la pression et de la température, un soudage-diffusion dudit premier et dudit second alliages métalliques par compression isostatique à chaud.

Au sens de l'invention, la surface de l'empreinte du moule appartient à des éléments de moules, c'est-à-dire soit à des parties du moule lui-même (coquilles), soit à ses outillages annexes (moule de fond, moule de bague, etc.).

D'autre part, la technique de compression isostatique à chaud permet d'effectuer le soudage-diffusion par mise en présence desdits premier et second alliages métalliques et application de températures et pressions élevées, dans des conditions particulières, comme décrit ci-dessous.

Dans le cas des moules destinés au formage de produits verriers et de l'association de fonte ou de bronze, d'une part, et d'alliages à base de nickel, d'autre part, l'effet obtenu est une surface d'empreinte régulière et lisse préservée pendant de plus longues durées, y compris consécutivement à des chocs, une adhésion accrue et plus résistante dans le temps du premier et du second alliages métalliques, un substrat - constitué en l'occurrence par ledit premier alliage métallique - non affecté thermiquement, une absence de barrière thermique à la liaison entre les deux matériaux et donc des échanges thermiques non empêchés, la fréquence de graissage des moules passant de 20-30 min à 4-8 heures voire plus. Les opérations de graissage et dépose des moules, notamment en vue de la réparation du revêtement à la surface de l'empreinte, sont donc moins fréquentes ; la disponibilité des moules pour la production est donc accrue ainsi que, par conséquent, les cadences de production.

Le fait que le substrat ne soit pas affecté thermiquement et l'absence de barrière thermique peuvent être attribués au parfait contrôle des températures inhérent à la technique de compression isostatique à chaud et, notamment, au refroidissement lent et maîtrisé du substrat.

Il est à noter en outre l'excellente qualité de l'interface entre les premier et second alliages métalliques, caractérisée par une diffusion du second dans le premier ou, autrement dit, par un gradient de composition sur une épaisseur plus ou moins importante selon les températures et pressions mises en oeuvre.

Pour constituer ledit premier alliage métallique, une fonte ou un bronze ou même un alliage n'appartenant pas à ces deux familles est susceptible de convenir et, notamment, une fonte dans le cas des moules ébaucheurs. Ledit second alliage métallique consiste, de préférence, en un alliage à base de nickel, comprenant notamment des proportions pondérales:
· d'au moins 80 % de Ni,
· de 0,1 à 4 % de Fe,
· de 0 à 15 % de Cr,
· de 1 à 5 % de Si,
· des traces habituelles,
· 0 à 0,8 % de C, et
· 0 à 4 % de B.

Ces alliages sont bien connus pour leurs propriétés à chaud : relative dureté, résistance à la corrosion.

La compression isostatique à chaud met en oeuvre, conformément à l'invention, des températures et pressions qui varient entre 500 et 2000°C, respectivement entre 800 et 2000 bars.

Le procédé de l'invention comprend deux variantes avantageuses.

Selon une première variante, la quantité désirée dudit second alliage métallique est disposée sur la surface de l'empreinte du moule sous forme pulvérulente et encapsulée dans un conteneur étanche au gaz de compression isostatique à chaud.

Selon la seconde variante, la quantité désirée dudit second alliage métallique est disposée sur la surface de l'empreinte du moule sous forme massive et reliée à celle-ci, par exemple par soudure TIG, à ses extrémités de telle sorte que la surface de contact entre ledit premier et ledit second alliages métalliques soit isolée de manière étanche du gaz de compression isostatique à chaud. L'interface entre les premier et second alliages métalliques est, éventuellement, mise sous vide avant l'opération de compression isostatique à chaud.

L'invention a également pour objet un moule obtenu par un procédé tel que décrit ci-dessus et destiné à la fabrication de produits verriers ; il s'agit en particulier d'un moule ébaucheur ou d'un moule finisseur ou de tout élément de moule (moule de fond, moule de bague, poinçon destinés à la fabrication de bouteilles, pots, flacons...

Un autre objet de l'invention consiste en un procédé de fabrication de produits verriers au moyen d'un tel moule. Comme explicité ci-dessus, ce procédé garantit une qualité optimale du produit verrier tout en procurant un rendement de production accru.

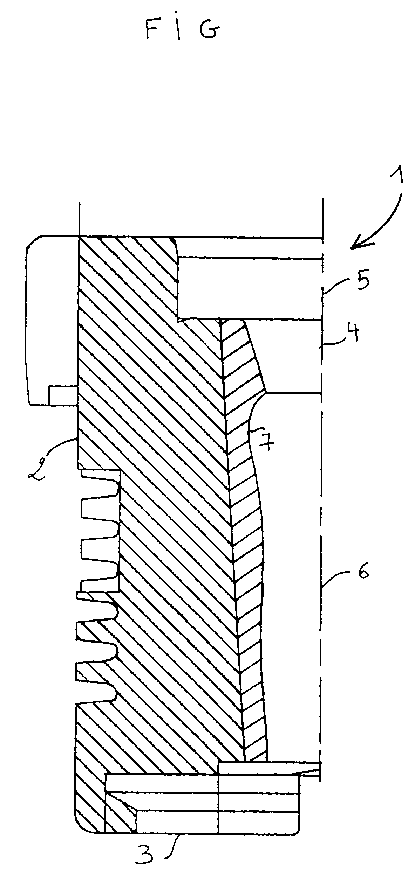

La description qui suit se réfère à la figure unique annexée qui est une représentation en coupe d'une coquille de moule ébaucheur réalisé conformément au procédé de l'invention.

La coquille 1 est essentiellement constituée d'un corps en fonte 2. L'outillage annexe n'est pas représenté, mais son adaptation apparait dans la coquille 1 : il s'agit des enclavures 3 et 4 destinées à recevoir le moule de bague, respectivement le fond de moule. Est également apparent le trou de guidage 5 du support de fond de moule.

Il est précisé que la coquille 1 est dessinée à l'échelle, le moule résultant de l'association de deux telles coquilles étant destiné à la production de bouteilles de bière.

La cavité 6 définit la forme de l'ébauche. La surface de l'empreinte qui la délimite est, en grande partie, constituée d'un revêtement 7 en alliage à base de nickel appliqué sur la fonte par compression isostatique à chaud.

L'alliage à base de nickel de départ se trouve sous forme pulvérulente et a pour composition, en poids : 0,30 % de C, 3,6 % de Si, 1,6 % de B, 9 % de Cr, 2,6 % de Fe, le reste étant quasiment exclusivement constitué de Ni.

La surface de fonte à revêtir, délimitant une cavité tronconique, est nettoyée. Une quantité désirée de poudre d'alliage à base de nickel y est répartie. Un conteneur de forme en acier doux est rapporté au substrat en fonte par soudage, l'ensemble ainsi constitué formant une enceinte contenant la poudre ; cette enceinte, qui est mise sous vide, est totalement étanche au gaz de compression isostatique à chaud permettant ainsi la densification de la poudre lors de la compression. Un noyau incompressible, de contour correspondant à la surface apparente désirée du revêtement d'alliage base Ni, est inséré dans l'empreinte du moule avant le début de la compression.

La compression isostatique à chaud est effectuée dans une enceinte au moyen d'argon. Elle consiste à appliquer une pression de 1250 bars, tout en maintenant une température de 920°C pendant 2 heures, puis en refroidissant jusqu'à 800°C à une vitesse de 300°C par heure, puis jusqu'à 700°C à une vitesse de 50°C par heure, puis jusqu'à la température ambiante à raison, de nouveau, de 300°C par heure.

Est alors effectué un traitement thermique de détentionnement qui consiste à porter la pièce à 600°C pendant quelques heures, puis à la refroidir à une vitesse de 30 à 40°C par heure.

Le noyau incompressible est extrait et le conteneur de forme éliminé par usinage ou dissolution chimique.

L'épaisseur d'un revêtement ainsi constitué peut varier de 0,1 mm à des valeurs aussi élevées que 40 mm et plus ; elle est, de préférence, comprise entre 2 et 10 mm.

La qualité de l'interface est excellente, l'adhésion durable ; la fréquence des graissages du moule passe de 30 min à 8 heures environ.

## Revendications

1. Procédé de fabrication d'un moule pour produits verriers, **caractérisé en ce qu'**il comprend les étapes consistant à :
· disposer sur une partie ou la totalité de la surface de l'empreinte du moule, constituée d'un premier alliage métallique, une quantité désirée d'un second alliage métallique, puis à
· effectuer, sous l'action conjuguée de la pression et de la température, un soudage-diffusion dudit premier et dudit second alliages métalliques par compression isostatique à chaud.

2. Procédé selon la revendication 1, **caractérisé en ce que** ledit premier alliage métallique est une fonte ou un bronze et ledit second alliage métallique un alliage à base de nickel.

3. Procédé selon la revendication 2, **caractérisé en ce que** ledit second alliage comprend des proportions pondérales moyennes d'au moins 80 % de Ni, de 0,1 à 4 % de Fe, de 0 à 15 % de Cr, de 1 à 5 % de Si et des traces habituelles ainsi que des quantités n'excédant pas 0,8 % de C et 4 % de B.

4. Procédé selon la revendication 2, **caractérisé en ce que** l'opération de soudage-diffusion par compression isostatique à chaud est effectuée à température et pression variables entre 500 et 2000°C. respectivement entre 800 et 2000 bars.

5. Procédé selon l'une des revendications 1 à 4, **caractérisé en ce que** la quantité désirée dudit second alliage métallique est disposée sur la surface de l'empreinte du moule sous forme pulvérulente et encapsulée dans un conteneur étanche au gaz de compression isostatique à chaud.

6. Procédé selon l'une des revendications 1 à 4, **caractérisé en ce que** la quantité désirée dudit second alliage métallique est disposée sur la surface de l'empreinte du moule sous forme massive et reliée à celle-ci à ses extrémités de telle sorte que la surface de contact entre ledit premier et ledit second alliages métalliques soit isolée de manière étanche du gaz de compression isostatique à chaud.

7. Moule obtenu par un procédé conforme à l'une des revendications 1 à 6 et destiné à la fabrication de produits verriers.

8. Moule selon la revendication 7, consistant en un moule ébaucheur destiné à la fabrication de bouteilles.

9. Moule selon la revendication 7, consistant en un moule finisseur destiné à la fabrication de bouteilles.

10. Moule selon la revendication 7, consistant en un moule de bague destiné à la fabrication de bouteilles.

11. Moule selon la revendication 7, consistant en un moule de fond destiné à la fabrication de bouteilles.

12. Moule selon la revendication 7, consistant en un poinçon destiné à la fabrication de bouteilles

13. Procédé de fabrication de produits verriers au moyen d'un moule selon la revendication 7.
